# EUROPEAN PATENT APPLICATION

(11) **EP 4 787 966 A1**
(43) Date of publication of application: **05.08.2026**
(21) Application number: 24872350.4
(22) Date of filing: 26.09.2024
(51) Int. Cl.: H04W 36/08, H04W 28/04, H04W 72/1268, H04W 72/231, H04W 74/04

(54) **COMMUNICATION DEVICE, BASE STATION, AND COMMUNICATION METHOD**

(30) Priority: 28.09.2023 JP 2023168902
(71) Applicant: DENSO CORPORATION, Kariya-city, Aichi 448-8661 (JP)
(72) Inventor: MAEMOTO, Daiki, Kariya-city, Aichi 448-8661 (JP); NAGANO, Tatsuki, Kariya-city, Aichi 448-8661 (JP)
(74) Representative: TBK
(86) International application number: PCT/JP2024/034335
(87) International publication number: WO 2025/070564

(57) **Abstract**

A communication apparatus (100) according to an embodiment comprises: a receiver (112) configured to receive, from a base station (200), a medium access control (MAC) control element (CE) including a cell switch command that triggers a cell switch; and a controller (120) configured to, on the basis of the cell switch command, skip a random access (RA) procedure and perform a Layer 1/Layer 2 triggered mobility (LTM) cell switch, and in the LTM cell switch, perform transmission of a first physical uplink shared channel (PUSCH). The receiver is configured to, after transmission of the first PUSCH, receive, from the base station, a physical downlink control channel (PDCCH) with a cell radio network temporary identifier (C-RNTI). The controller is configured to determine whether the LTM cell switch is successfully completed or not on the basis of a hybrid automatic repeat request (HARQ) process identifier received on the PDCCH and a HARQ process identifier for transmission of the first PUSCH.

## Description

### Cross-Reference to Related Application

This application is based on and claims the benefit of priority from Japanese Patent Application No. 2023-168902, filed on September 28, 2023, the entire contents of which are incorporated herein by reference.

### Technical Field

The present disclosure relates to a communication apparatus, a base station, and a communication method.

### Background Art

In a mobile communication system conforming to the technical specification of 3GPP (registered trademark, the same applies hereinafter) (Third Generation Partnership Project), which is a project of standardizing the mobile communication system, introduction of L1 (Layer 1)/L2 (Layer 2) triggered mobility (L1/L2-Triggered Mobility: LTM) is planned (see, for example, Non-Patent Literature 1). In LTM, on the basis of an L1 measurement report received from a communication apparatus, a base station transmits, to the communication apparatus by means of a medium access control control element (MAC CE), a cell switch command that triggers a cell switch; thereby, the serving cell of the communication apparatus is switched. As compared to a cell switch based on a radio resource control (RRC) message, the communication apparatus can dynamically perform the cell switch, and can reduce mobility delay.

In LTM, for example, early synchronization in which the communication apparatus performs synchronization with a candidate cell before receiving a cell switch command, LTM execution in which the communication apparatus performs the cell switch according to a cell switch command based on an L1 measurement report, etc. can be performed.

In LTM execution, it is agreed that both a method in which a random access procedure is performed between the communication apparatus and the base station (hereinafter, RACH-based LTM (RACH-base LTM)) and a method in which the communication apparatus performs uplink transmission without a random access procedure being performed between the communication apparatus and the base station (hereinafter, RACH-less LTM) are supported. In addition, it is agreed that, in the case where RACH-less LTM is performed, both uplink transmission based on configuration information for configuring monitoring of uplink grants for dynamically allocating radio resources for uplink transmission (hereinafter, first configuration information) and uplink transmission based on configuration information for configuring uplink transmission without an uplink grant (hereinafter, second configuration information) are supported.

### Citation List

### Non Patent Literature

Non Patent Literature 1: 3GPP TSG-RAN WG2 Meeting #121, R2-2302039, "38.300 running CR for introduction of NR further mobility enhancements"

### Summary of Invention

A communication apparatus according to a first aspect comprises: a receiver configured to receive, from a base station, a medium access control (MAC) control element (CE) including a cell switch command that triggers a cell switch; and a controller (120) configured to, on the basis of the cell switch command, skip a random access (RA) procedure and perform a Layer 1/Layer 2 triggered mobility (LTM) cell switch, and in the LTM cell switch, perform transmission of a first physical uplink shared channel (PUSCH). The receiver is configured to, after transmission of the first PUSCH, receive, from the base station, a physical downlink control channel (PDCCH) with a cell radio network temporary identifier (C-RNTI). The controller is configured to determine whether the LTM cell switch is successfully completed or not on the basis of a hybrid automatic repeat request (HARQ) process identifier received on the PDCCH and a HARQ process identifier for transmission of the first PUSCH.

A base station according to a second aspect comprises: a transmitter configured to use a medium access control (MAC) control element (CE) to transmit, to a communication apparatus, a cell switch command that triggers a cell switch; and a controller configured to, on the basis of the cell switch command, perform control to skip a random access (RA) procedure and perform a Layer 1/Layer 2 triggered mobility (LTM) cell switch, and in the LTM cell switch, perform control to perform transmission of a first physical uplink shared channel (PUSCH). The transmitter is configured to, after reception of the first PUSCH, transmit, to the communication apparatus, a physical downlink control channel (PDCCH) with a cell radio network temporary identifier (C-RNTI). The controller is configured to indicate whether the LTM cell switch is successfully completed or not on the basis of a hybrid automatic repeat request (HARQ) process identifier received on the PDCCH and a HARQ process identifier for transmission of the first PUSCH.

A communication method according to a third aspect is a communication method performed by a communication apparatus. The communication method comprises the steps of: receiving, from a base station, a medium access control (MAC) control element (CE) including a cell switch command that triggers a cell switch; on the basis of the cell switch command, skipping a random access (RA) procedure and performing a Layer 1/Layer 2 triggered mobility (LTM) cell switch, and in the LTM cell switch, performing transmission of a first physical uplink shared channel (PUSCH); and after transmission of the first PUSCH, receiving, from the base station, a physical downlink control channel (PDCCH) with a cell radio network temporary identifier (C-RNTI). In the step of performing transmission of the first PUSCH, whether the LTM cell switch is successfully completed or not is determined on the basis of a hybrid automatic repeat request (HARQ) process identifier received on the PDCCH and a HARQ process identifier for transmission of the first PUSCH.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack according to the embodiment.
Fig. 3 is a diagram for describing an overview of LTM.
Fig. 4 is a diagram illustrating a configuration of a UE according to the embodiment.
Fig. 5 is a diagram illustrating a configuration of a base station according to the embodiment.
Fig. 6 is a sequence diagram (part 1) for describing an operation example according to the embodiment.
Fig. 7 is a sequence diagram (part 2) for describing the operation example according to the embodiment.
Fig. 8 is a flowchart (part 1) for describing the operation example according to the embodiment.
Fig. 9 is a flowchart (part 2) for describing the operation example according to the embodiment.

### Description of Embodiments

A mobile communication system according to an embodiment will be described with reference to the drawings. In the description of the drawings, the same or similar parts are denoted by the same or similar reference numerals.

However, in the case where the communication apparatus has received both the first configuration information and the second configuration information, there is a concern that the communication apparatus cannot perform appropriate uplink transmission because the communication apparatus does not know which type of configuration information to use as a basis for performing uplink transmission.

Thus, an object is to provide a communication apparatus and a communication method capable of performing appropriate uplink transmission in the case where RACH-less LTM is performed.

### (System Configuration)

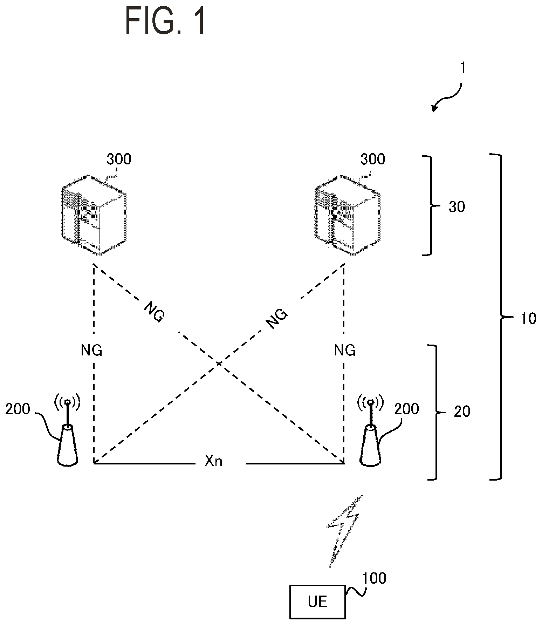

First, a configuration of a mobile communication system 1 according to the present embodiment is described with reference to Fig. 1. The mobile communication system 1 is, for example, a system conforming to a technical specification (TS) of 3GPP. Hereinafter, description is made with an example in which the 5th generation system (5G system) of the 3GPP standard, that is, a mobile communication system based on a new radio (NR) access is used as the mobile communication system 1.

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a core network of 5G.

The UE 100 is a communication apparatus that communicates with a base station 200. The UE 100 may be an apparatus used by a user. The UE 100 is, for example, a mobile apparatus such as a mobile phone terminal such as a smartphone, a tablet terminal, a notebook PC, a communication module, or a communication card. The UE 100 may be a vehicle (for example, a car, a train, or the like) or an apparatus provided in the vehicle (for example, a vehicle UE). The UE 100 may be a transport body other than the vehicle (for example, a ship, an airplane, or the like) or an apparatus provided in the transport body (for example, an aerial UE). The UE 100 may be a sensor or an apparatus provided in the sensor. Note that the UE 100 may be referred to as another term such as a terminal, a terminal apparatus, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. The UE 100 is an example of a terminal, and the terminal may include a factory device or the like.

The NG-RAN 20 includes a plurality of base stations 200. Each base station 200 manages at least one cell. One or the plurality of base stations 200 may correspond to one or a plurality of cells. In the present embodiment, the base station 200 may be replaced with a cell. The cell configures a minimum unit of a communication area. One cell belongs to one frequency (carrier frequency). The term "cell" may indicate a radio communication resource and may also indicate a communication object of the UE 100. Each base station 200 can perform radio communication with the UE 100 existing in its own cell. The base station 200 communicates with the UE 100 using a protocol stack of RAN. Details of the protocol stack are described below. Also, the base station 200 is connected to another base station 200 (may be referred to as a neighboring base station) via an Xn interface. The base station 200 communicates with the neighboring base station via the Xn interface. Also, the base station 200 provides NR user plane and control plane protocol terminations toward the UE 100 and is connected to the 5GC 30 via an NG interface. Such a base station 200 of NR may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for U-plane processing. The AMF and the UPF are connected to the base station 200 via the NG interface.

### (Configuration Example of Protocol Stack)

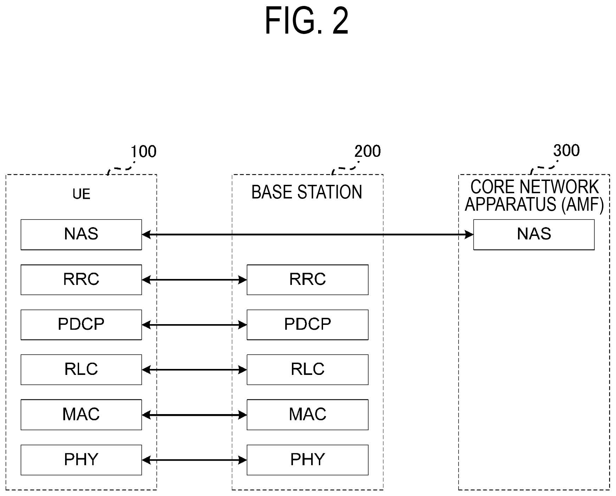

Next, a configuration example of the protocol stack according to the present embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs coding and decoding, modulation and demodulation, antenna mapping and demapping, and resource mapping and demapping. Data and control information are transmitted between the PHY layer of the UE 100 and the PHY layer of the base station 200 via a physical channel.

The MAC layer performs priority control of data, retransmission processing by hybrid ARQ (HARQ), random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size, modulation and coding scheme (MCS)) and resources to be allocated to the UE 100.

The RLC layer transmits data to the RLC layer on a reception side using features of the MAC layer and the PHY layer. Data and control information are transmitted between the RLC layer of the UE 100 and the RLC layer of the base station 200 via a logical channel.

The PDCP layer performs header compression and decompression and encryption and decryption.

A service data adaptation protocol (SDAP) layer may be provided as an upper layer of the PDCP layer. The service data adaptation protocol (SDAP) layer performs mapping between an IP flow serving as a unit in which a core network performs quality of service (QoS) control and a radio bearer serving as a unit in which an access stratum (AS) performs QoS control.

The RRC layer controls the logical channel, the transport channel, and the physical channel in response to establishment, reestablishment, and release of the radio bearer. RRC signaling for various configurations is transmitted between the RRC layer of the UE 100 and the RRC layer of the base station 200. In a case where an RRC connection exists between the RRC of the UE 100 and the RRC of the base station 200, the UE 100 is in an RRC connected state. In a case where no RRC connection exists between the RRC of the UE 100 and the RRC of the base station 200, the UE 100 is in an RRC idle state. In a case where an RRC connection between the RRC of the UE 100 and the RRC of the base station 200 is suspended, the UE 100 is in an RRC inactive state.

An NAS layer located above the RRC layer in the UE 100 performs session management and mobility management of the UE 100. NAS signaling is transmitted between the NAS layer of the UE 100 and the NAS layer of the core network apparatus 300.

Note that the UE 100 includes an application layer and the like in addition to a protocol of a radio interface.

### (Radio Frame Configuration)

In the 5G system, downlink transmission and uplink transmission are configured in a radio frame of 10 ms duration. For example, the radio frame is expressed by a system frame number (SFN) of 0 to 1023. For example, the radio frame is configured with 10 subframes. For example, one subframe may be 1 ms. Also, one subframe may be configured with one or more slots. For example, the number of symbols configuring one slot is 14 for a normal cyclic prefix (CP) and 12 for an extended CP. Also, the number of slots configuring one subframe changes depending on a configured subcarrier spacing. For example, for the normal CP, in a case where the subcarrier spacing is configured as 15 kHz, the number of slots per subframe is one (that is, 14 symbols), in a case where the subcarrier spacing is configured as 30 kHz, the number of slots per subframe is two (that is, 28 symbols), in a case where the subcarrier spacing is configured as 60 kHz, the number of slots per subframe is four (that is, 56 symbols), and in a case where the subcarrier spacing is configured as 120 kHz, the number of slots per subframe is eight (that is, 128 symbols). For the extended CP, in a case where the subcarrier spacing is configured as 60 kHz, the number of slots per subframe is four (that is, 48 symbols). That is, the number of slots configuring one subframe is determined based on the subcarrier spacing configured by the base station 200. Also, the number of symbols configuring one subframe is determined based on the subcarrier spacing configured by the base station 200. That is, the number of symbols configuring a subframe of 1 ms is determined based on the subcarrier spacing configured by the base station 200, and a length of each symbol (a length in a time direction) changes.

### (LTM)

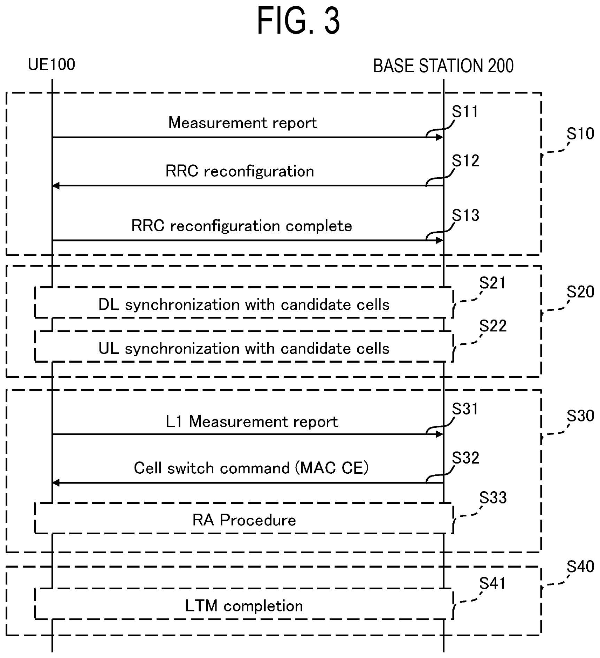

In the mobile communication system 1 conforming to the technical specification of 3GPP, introduction of L1 (Layer 1)/L2 (Layer 2) triggered mobility (L1/L2-Triggered Mobility, LTM) is planned. As illustrated in Fig 3, the following operation can be performed in LTM. The following operation may be an operation during an LTM procedure.

### Step S10: LTM preparation

The UE 100 in the RRC connected state may perform the following operation as the LTM preparation operation.

### Step S11:

The UE 100 transmits a measurement report (MeasurementReport) message to the base station 200. The base station 200 determines to use the LTM and initiates candidate cell preparation.

### Step S12:

The base station 200 transmits an RRC reconfiguration (RRCReconfiguration) message including the LTM candidate cell configuration of one or more candidate cells.

### Step S13:

The UE 100 stores the LTM candidate cell configuration. The UE 100 transmits an RRC reconfiguration complete (RRCReconfigurationComplete) message to the base station 200.

### Step S20: Early Synchronization

The UE 100 may perform the following operation as the operation of the early synchronization.

### Step S21:

The UE 100 performs downlink (DL) synchronization with the candidate cell before receiving a cell switch command. The UE 100 may perform DL synchronization based on a synchronization signal (SS) and a physical broadcast channel (PBCH) block (SSB).

### Step S22:

The UE 100 performs timing advance (TA) acquisition before receiving the cell switch command. The UE 100 may perform the TA acquisition based on a PDCCH order (specifically, the PDCCH ordered RACH). The PDCCH order may be triggered only by the source cell.

### Step S30: LTM Execution

The UE 100 may perform the following operation as the operation of the LTM execution.

### Step S31:

The UE 100 performs the L1 measurement on the candidate cell configured by the LTM candidate cell configuration. The UL 100 transmits a lower-layer measurement report based on the L1 measurement (hereinafter, referred to as L1 measurement report) to the base station 200.

### Step S32:

The base station 200 determines to perform a cell switch to the target cell. The base station 200 transmits the MAC CE that triggers the cell switch by including the candidate configuration index of the target cell. The UE 100 switches the configuration of the target cell.

### Step S33:

In a case where the cell switch needs to include performing a random access (RA) procedure, the UE 100 performs the RA procedure toward the target cell.

### Step S40: LTM Completion

The UE 100 may perform the following operation as the operation of the LTM completion.

### Step S41:

The UE 100 indicates that the completion of the cell switch to the target cell is successful.

Note that the UE 100 may perform steps S20 to S40 a plurality of times for a subsequent LTM cell switch based on the configuration without releasing the configuration provided in step S12.

Meanwhile, in LTM execution, it is agreed that both a method in which a random access procedure is performed between the UE 100 and the base station 200 (hereinafter, RACH-based LTM (RACH-base LTM)) and a method in which the UE 100 performs uplink transmission without a random access procedure being performed between the UE 100 and the base station 200 (hereinafter, RACH-less LTM) are supported. In addition, it is agreed that, in the case where RACH-less LTM is performed, both uplink transmission based on configuration information for configuring monitoring of uplink grants for dynamically allocating radio resources for uplink transmission (hereinafter, first configuration information) and uplink transmission based on configuration information for configuring uplink transmission without an uplink grant (hereinafter, second configuration information) are supported.

However, in the case where the UE 100 has received both the first configuration information and the second configuration information, there is a concern that the UE 100 cannot perform appropriate uplink transmission because the UE 100 does not know which type of configuration information to use as a basis for performing uplink transmission. Thus, an operation for enabling performance of appropriate uplink transmission in the case where RACH-less LTM is performed will be described later.

### (Configuration of the user equipment)

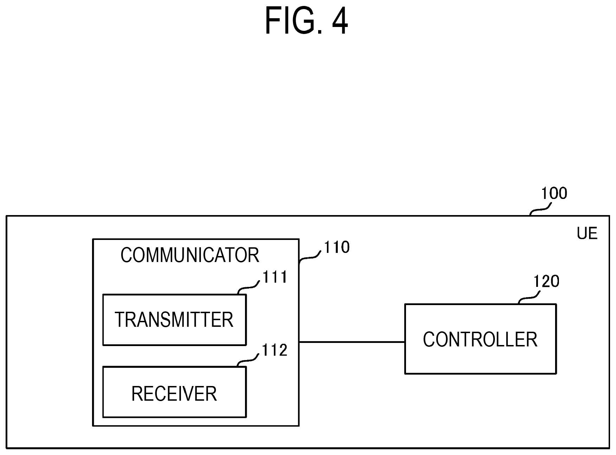

A configuration of the UE 100 according to the embodiment will now be described with reference to Fig. 4. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may be configured with a plurality of antennas and a radio frequency (RF) circuit. The antenna converts a signal into a radio wave and emits the radio wave into a space. Furthermore, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described below may be an operation controlled by the controller 120. The controller 120 may include at least one processor capable of executing a program and a memory that stores the program. The processor may execute the program and perform the operation of the controller 120. The controller 120 may include a digital signal processor that performs digital processing of a signal transmitted and received via the antenna and the RF circuit. The digital processing includes processing of the protocol stack of the RAN. Note that the memory stores the program to be executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. All or a part of the memory may be included in the processor.

The controller 120 may include a MAC processor that performs processing in the MAC layer and an upper layer processor that performs processing in a layer higher than the MAC layer. The MAC processor may be referred to as a MAC entity. The upper layer processor performs processing in a layer higher than the MAC layer. The upper layer processor may include a PDCP processor that performs processing in the PDCP layer and an RRC processor that performs processing in the RRCP layer. The PDCP processor may be referred to as a PDCP entity. The RRC processor may be referred to as an RRC entity. For the upper layer processor, information from the MAC processor may be information from a lower layer.

Note that each of the MAC processor and the upper layer processor (the PDCP processor and/or the RRC processor) may be configured by one processor or may be configured by a plurality of processors. Note that the operations of the MAC processor and the upper layer processor may be the operation of the controller 120. Among the operations of each layer processor, the transmission and/or reception operation may be the operation of the communicator 110 (the transmitter 111 and/or the receiver 112).

In the UE 100 thus configured, the receiver 112 receives, from the base station 200 by means of a MAC CE, a cell switch command that triggers a cell switch. On the basis of the cell switch command, the controller 120 controls uplink transmission to a target cell that is performed without an RA procedure between the UE 100 and the target cell. The receiver 112 receives, from the base station 200, first configuration information for configuring monitoring of uplink grants for dynamically allocating radio resources for uplink transmission and second configuration information for configuring uplink transmission without an uplink grant. The controller 120 controls uplink transmission on the basis of, out of the first configuration information and the second configuration information, the configuration information by which the occasion of uplink transmission is configured earlier. Thus, in the case where the UE 100 has received both the first configuration information and the second configuration information, the UE 100 recognizes which type of configuration information to use as a basis for performing uplink transmission. The UE 100 can perform uplink transmission at an early occasion, and can complete the LTM procedure earlier. The UE 100 can perform appropriate uplink transmission.

### (Configuration of the base station)

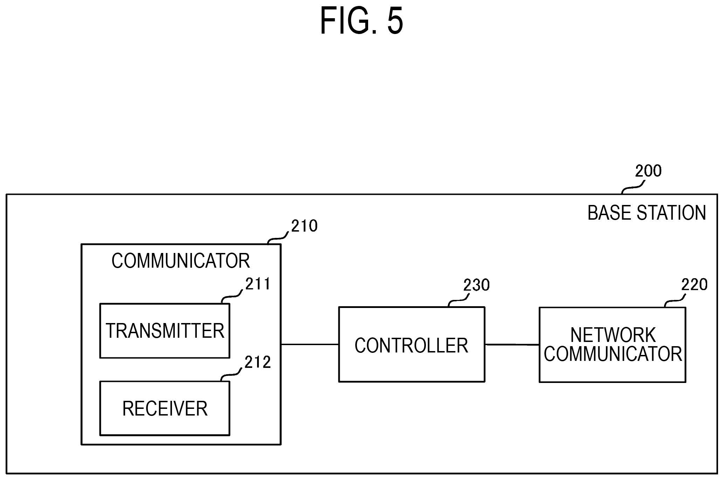

A configuration of the base station 200 according to the embodiment will now be described with reference to Fig. 5. The base station 200 includes a communicator 210, a network communicator 220, and a controller 230.

For example, the communicator 210 receives a radio signal from the UE 100 and transmits the radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from a network. The network communicator 220 receives, for example, a signal from a neighboring base station connected via the Xn interface that is an interface between base stations and transmits the signal to the neighboring base station. Also, the network communicator 220 receives a signal, for example, from the core network apparatus 300 connected via the NG interface and transmits the signal to the core network apparatus 300.

The controller 230 performs various types of control in the base station 200. The controller 230 controls, for example, communication with the UE 100 via the communicator 210. Also, the controller 230 controls, for example, communication with a node (for example, the neighboring base station or the core network apparatus 300) via the network communicator 220. The operation of the base station 200 described above and described below may be an operation controlled by the controller 230. The controller 230 may include at least one processor capable of executing a program and a memory that stores the program. The processor may execute the program and perform the operation of the controller 230. The controller 230 may include a digital signal processor that performs digital processing of a signal transmitted and received via the antenna and the RF circuit. The digital processing includes processing of the protocol stack of the RAN. Note that the memory stores the program to be executed by the processor, parameters related to the program, and data related to the program. All or a part of the memory may be included in the processor.

### (Operation example)

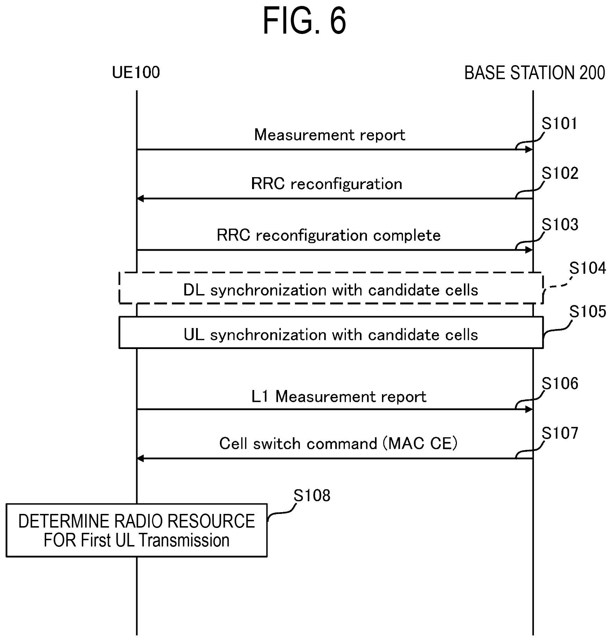

An operation example will now be described with reference to Figs. 6 to 9. A description provided previously may be omitted. The UE 100 is in a state of being RRC-connected to a cell (source cell) managed by the base station 200. Then, the UE 100 performs communication with the base station 200 in the source cell until a cell switch to a target cell is performed.

For the UE 100, the communication with the base station 200 may be communication with the cell. Thus, for the UE 100, reception of information, a message, etc. from the base station 200 may be reception of information, a message, etc. from the cell, and transmission of information, a message, etc. to the base station 200 may be transmission of information, a message, etc. to the cell.

### Step S101:

The transmitter 111 of the UE 100 transmits a measurement report (message) to the base station 200. The receiver 212 of the base station 200 receives the measurement report from the UE 100.

The controller 230 of the base station 200 determines whether to use LTM or not. The controller 230 may determine whether to use LTM or not on the basis of, for example, the measurement report. In the case where the controller 230 has determined to use LTM, the controller 230 initiates candidate cell preparation.

As candidate cell preparation, the controller 230 may select a candidate cell for the target cell in LTM on the basis of the measurement report. The controller 230 may select a candidate cell from among, for example, cells managed by the base station 200. The candidate cell may be referred to as an LTM candidate cell.

The controller 230 may generate configuration information regarding LTM (hereinafter, LTM configuration information). The controller 230 may, for example, incorporate the generated LTM configuration information (for example, LTM-Config) into an RRC reconfiguration message. That is, the controller 230 may instruct the UE 100 to perform LTM (operations related to LTM) by incorporating LTM configuration information into the RRC reconfiguration message. In the case where LTM configuration information is included in the RRC reconfiguration message, the UE 100 may perform LTM (operations related to LTM).

The LTM configuration information (for example, LTM-Config) may be information used to provide (one or more) LTM candidate cell configuration(s). The controller 230 may include, in the LTM configuration information (for example, LTM-Config), for example, at least one of a list for releasing a candidate cell (hereinafter may be referred to as an LTM candidate release list (for example, ltm-CandidateToReleaseList)) and a list for adding or modifying a candidate cell (hereinafter may be referred to as an LTM addition/modification list (for example, ltm-CandidateToAddModList)).

The LTM candidate release list may be a list of LTM candidate cell configurations to be deleted. The LTM candidate release list may be configured with an identifier of candidate cell (for example, ltm-CandidateId).

The LTM addition/switch list may be a list configured by LTM candidate information (for example, LTM-Candidate). The LTM addition/switch list may be a list of LTM candidate cell configurations to be added and/or switched. The LTM candidate information may include, for example, at least one of the following pieces of information.
· Identifier of a candidate cell (for example, ltm-CandidateId)
· LTM candidate cell configuration information (for example, ltm-CandidateConfig)
· LTM configuration completion information indicating whether the LTM candidate cell configuration is a complete configuration or a delta-configuration (for example, ltm-ConfigComplete)
· Configuration information for configuring information used for early synchronization (for example, ltm-EarlyUL-SyncConfig)
· Identifier indicating whether to keep from performing L2 resetting for an LTM candidate cell in the LTM cell switch procedure or not (for example, ltm-NoResetID)
· List for adding/modifying information used for early synchronization (for example, ltm-Candidate-Tci-States-ToAddModList)
· Identifier for releasing (removing) information used for early synchronization (for example, ltm-Candidate-Tci-States-ToReleaseList)

The identifier of a candidate cell may be an identifier of an LTM candidate cell configuration. The LTM candidate cell configuration may be information (possibly referred to as LTM candidate cell configuration information) indicating (or including) an LTM candidate cell configuration. The LTM candidate cell configuration may include an RRC reconfiguration message used to configure one LTM candidate cell. Therefore, the LTM candidate cell configuration may include an RRC (re)configuration (RRC reconfiguration message) to be configured in the UE 100. The LTM candidate cell configuration may include cell group configuration information (for example, CellGroupConfig) including serving cell configuration information (for example, ServingCellConfig), etc. The candidate cell configuration information may correspond to an LTM candidate cell configuration included in the RRC reconfiguration message in Step S12 described above. The LTM configuration completion information may indicate whether an LTM candidate cell configuration in the LTM candidate cell configuration information is a complete configuration or not.

The LTM candidate cell configuration may be a configuration based on the LTM candidate information (for example, LTM-Candidate) or a configuration indicated by the LTM candidate information. The LTM candidate cell configuration may be referred to as LTM candidate cell configuration information. As described above, the LTM configuration information may include the RRC reconfiguration information applied to the cell after the cell switch. The RRC reconfiguration information may be information indicating RRC reconfiguration or an RRC reconfiguration message.

In the present specification, in the case of a simple expression of an RRC reconfiguration message, the RRC reconfiguration message may be an RRC reconfiguration message including LTM configuration information, or may be an RRC reconfiguration message included in an LTM candidate cell configuration. For example, in the case of a simple expression of an RRC reconfiguration message, the RRC reconfiguration message may be an RRC reconfiguration message transmitted from the base station 200 (received by the UE 100), or may be an RRC reconfiguration message included in an LTM candidate cell configuration corresponding to a target configuration identifier indicated from the MAC layer during LTM execution. Note that the controller 120 may include a MAC processor that performs processing in the MAC layer and an upper layer processor that performs processing in a layer higher than the MAC layer. The MAC processor may be referred to as a MAC entity. The upper layer processor performs processing in a layer higher than the MAC layer. The upper layer processor may include a PDCP processor that performs processing in the PDCP layer and an RRC processor that performs processing in the RRCP layer. The PDCP processor may be referred to as a PDCP entity. The RRC processor may be referred to as an RRC entity. For the upper layer processor, information from the MAC processor may be information from a lower layer.

The controller 230 of the base station 200 may incorporate, into an RRC reconfiguration message, first configuration information for configuring monitoring of uplink grants for dynamically allocating radio resources for uplink transmission and second configuration information for configuring uplink transmission without an uplink grant.

The uplink transmission herein is uplink transmission to a target cell that is performed without a random access (RA) procedure between the UE 100 and the target cell on the basis of a cell switch command transmitted by means of a MAC CE. The uplink transmission may be referred to as the first uplink transmission (First UL transmission).

The first configuration information may be configuration information for configuring, in the UE 100, a search space corresponding to a candidate timing at which a PDCCH is provided. The first configuration information may be, for example, PDCCH configuration information (for example, PDCCH-Config). The PDCCH configuration information may be information used to configure UE-specific PDCCH parameters, such as additional parameters for acquiring a control resource set (CORESET), a search space, and a PDCCH. An occasion in which the PDCCH configured using the first configuration information is monitored may be referred to as a PDCCH monitoring occasion.

The UE 100 monitors PDCCH in the configured search space. The UE 100 receives downlink control information (DCI) carried on the PDCCH. According to a resource allocation (scheduling) indicated by DCI, the UE 100 performs reception of a physical downlink shared channel (PDSCH) and/or transmission of a physical uplink shared channel (PUSCH). For example, the UE 100 may monitor a set of PDCCH candidates according to the corresponding search space. That is, the UE 100 may, according to the corresponding search space, monitor a set of PDCCH candidates in a control resource set (CORESET) in a downlink bandwidth part (DL BWP) in a serving cell in which monitoring of PDCCH is configured. Here, the monitoring may indicate decoding each PDCCH candidate according to a DCI format monitored.

The second configuration information may be configuration information for configuring uplink transmission without a dynamic uplink grant (hereinafter, occasionally referred to as CG transmission). The second configuration information may be, for example, configured grant configuration information (for example, ConfiguredGrantConfig). The configured grant configuration information is configuration information used to configure uplink transmission without a dynamic grant according to two possible schemes. The second configuration information may include, for example, information specifying radio resources used for CG transmission.

The CG transmission includes type 1 CG transmission and type 2 CG transmission. In the type 1 CG transmission, uplink transmission is granted by RRC signaling (an RRC message). In the type 1 CG transmission, the actual uplink grant may be configured via RRC. In the case where type 1 CG transmission is configured by an RRC message, the UE 100 performs CG transmission by using configured radio resources (referred to as CG resources as appropriate).

On the other hand, in the type 2 CG transmission, uplink transmission is granted by RRC signaling (an RRC message) and DCI. In the type 2 CG transmission, the actual uplink grant may be provided via a PDCCH (addressed to a CS-RNTI). In the case where type 1 CG transmission is configured by an RRC message and then CG transmission is activated (enabled) by DCI, the UE 100 performs CG transmission by using configured CG resources. In the case where CG transmission is deactivated (disabled), the UE 100 does not perform CG transmission. The CG transmission can be deactivated by DCI.

### Step S102:

The transmitter 211 of the base station 200 transmits an RRC reconfiguration message including LTM configuration information to the UE 100. The receiver 112 of the UE 100 receives the RRC reconfiguration message from the base station 200. The controller 120 of the UE 100 saves the LTM configuration information. Further, the controller 120 saves the first configuration information and the second configuration information.

### Step S103:

The transmitter 111 of the UE 100 transmits an RRC reconfiguration completion message to the base station 200. The receiver 212 of the base station 200 receives the RRC reconfiguration completion message from the UE 100.

### Step S104:

As an operation of early synchronization, downlink synchronization with each candidate cell may be performed. The controller 120 of the UE 100 performs downlink synchronization on the basis of, for example, an SSB transmitted from each candidate cell.

### Step S105:

As an operation of early synchronization, uplink synchronization with each candidate cell may be performed. For example, in each candidate cell configured on the UE 100 by the LTM candidate cell configuration, the transmitter 211 of the base station 200 may transmit, to the UE 100, a physical downlink control channel (PDCCH) order for initiating an RA procedure for early synchronization (that is, downlink control information (DCI)). The receiver 112 of the UE 100 may receive the PDCCH order from the base station 200. The PDCCH order in early synchronization may be a PDCCH order used to acquire a TA value without an RA response (PDCCH ordered-RACH for TA Acquisition without RAR).

The controller 120 of the UE 100 may initiate an RA procedure on the basis of the PDCCH order. The controller 120 may control the RA procedure on the basis of configuration information for configuring information used for early synchronization (hereinafter, early synchronization configuration information).

In each candidate cell, the transmitter 111 of the UE 100 transmits an RA preamble (message 1) to the base station 200 on a physical random access channel (PRACH). In each candidate cell, the receiver 212 of the base station 200 receives the RA preamble from the UE 100.

The controller 230 of the UE 100 may use an RA preamble based on the early synchronization configuration information, or may use an RA preamble based on information included in the PDCCH order. For example, in the PDCCH order, the controller 230 of the base station 200 may incorporate preamble indices, or may further incorporate SSB indices. The preamble index indicates which RA preamble to use. The SSB index indicates an SSB used to determine an RACH occasion for PRACH transmission. The controller 120 of the UE 100 may determine the RA preamble on the basis of the preamble index (and the SSB index). The controller 120 may use, for example, other information included in the PDCCH order and/or other information included in the early synchronization configuration information to transmit the RA preamble.

The controller 230 of the base station 200 calculates a timing advance (TA) value on the basis of the RA preamble from the UE 100. The controller 230 may perform control to omit transmission of an RA response (that is, message 2) that is a response to the RA preamble.

Note that the controller 230 may include information instructing execution of a RACH-less LTM in the RA response (that is, the message 2). The information may include information instructing the UE100 to skip the RA procedure of the LTM cell switch. The information may be information instructing execution of the RACH-less LTM in a case where the UE 100 should apply the same TA as that of the source cell (the base station 200 that manages the source cell).

### Step S106:

The transmitter 111 of the UE 100 performs L1 measurement in each candidate cell configured by the candidate cell configuration information, and then transmits an L1 measurement report to the base station 200. The receiver 212 of the base station 200 receives the L1 measurement report from the UE 100. The L1 measurement report is a report of measurement of a lower layer based on L1 measurement. The L1 measurement report is transmitted in a layer lower than the RRC layer. Note that the measurement report in Step S110 is transmitted in the RRC layer.

The controller 230 of the base station 200 determines a target cell in LTM (that is, an LTM target cell) on the basis of the L1 measurement report. The controller 230 may determine whether to cause the UE 100 to perform, in LTM execution, RACH-less LTM in which the UE 100 performs uplink transmission without an RA procedure being performed between the UE 100 and the base station 200 or to cause the UE 100 to perform, in LTM execution, RACH-based LTM (RACH-base LTM) in which an RA procedure is performed between the UE 100 and the base station 200.

In the case where the controller 230 has calculated a TA value in the target cell by performing early synchronization, the controller 230 may determine to cause the UE 100 to perform RACH-less LTM. In the case where the controller 230 sets, in a MAC CE for transmitting a cell switch command described later, a value valid as a TA value in the target cell, the controller 230 may determine to cause the UE 100 to perform RACH-less LTM. On the other hand, in the case where the controller 230 has not calculated a TA value in the target cell, the controller 230 may determine to cause the UE 100 to perform RACH-based LTM. In the case where the controller 230 sets, in the MAC CE, a value invalid as a TA value in the target cell, the controller 230 may determine to cause the UE 100 to perform RACH-based LTM. In the present operation example, the description is proceeded with on the assumption that the controller 230 has determined to cause the UE 100 to perform RACH-less LTM.

The controller 230 generates a MAC CE for transmitting a cell switch command. The MAC CE may be referred to as, for example, an LTM cell switch command MAC CE. The MAC CE may be referred to as a cell switch command (that is, may be a cell switch command). Hereinafter, the LTM cell switch command MAC CE may be appropriately referred to as a cell switch command. The cell switch command may include, for example, at least one piece of the following information (that is, field).
· Target configuration identifier (Target Configuration ID) indicating the index of the candidate target configuration to be applied to the LTM cell switch
· Timing advance command indicating whether TA for LTM target cell is valid
· Identifier of TCI state (TCI state ID) indicating and activating a transmission configuration indication (TCI) state for LTM target cell
· Identifier of uplink TCI state (UL TCI state ID) indicating and activating uplink TCI state for LTM target cell
· Identifier of downlink bandwidth part (DL BWP ID) activated in LTM target cell
· Identifier of uplink bandwidth part (UL BWP ID) activated in LTM target cell
· Information related to contention free random access (CFRA) resource

The target configuration identifier may be, among the identifiers of candidate cells included in the information of candidate cells described above, the identifier of a candidate cell to be a target cell that is a cell after switching.

The timing advance command (field) may indicate whether or not the TA (TA value) is valid for the target cell (for example, SpCell) corresponding to the target configuration (that is, the candidate cell configuration information) indicated by the target configuration identifier (field). In the case where a predetermined value (for example, FFF) is set as the value of this field, this field may indicate that no valid timing adjustment can be used for a primary TA group (Primary Timing Advance Group, PTAG) of the LTM target cell. In this case, the UE 100 needs to perform an RA procedure to the LTM target cell. That is, the UE 100 performs RACH-based LTM. On the other hand, in the case where a value other than predetermined values (for example, FFF) is set as the value of this field, this field indicates an index value (that is, a TA value) used to control the amount of timing adjustment that the MAC entity of the UE 100 should apply. That is, the timing advance command (field) indicates that an RA procedure of the LTM cell switch can be skipped. In this case, the UE 100 performs RACH-less LTM. Here, the predetermined value is defined in advance by a specification or the like, and may be a value known between the base station 200 and the UE 100.

The controller 120 of the UE 100 may execute the RACH-less LTM in a case where the same TA as that of the source cell (the base station that manages the source cell) should be applied (or is applied). The controller 120 may execute the RACH-less LTM in a case where the timing advance command (field) is the same as TA applied in the current source cell. Alternatively, the cell switch command may include information (field) indicating (instructing) that the same TA as that of the source cell (base station that manages the source cell) should be applied (or is applied), separately from the timing advance command (field). The information (field) related to the CFRA resource may indicate a resource used in a case where the UE 100 executes CFRA (for example, a radio resource, a preamble index indicating which RA preamble is used, or the like).

In the present operation example, the description is proceeded with on the assumption that the controller 230 of the base station 200 sets, in the timing advance command, a TA value calculated by performing early synchronization.

### Step S107:

The transmitter 211 of the base station 200 transmits a cell switch command to the UE 100 by means of a MAC CE. The receiver 112 of the UE 100 receives the cell switch command from the base station 200 by means of the MAC CE.

The controller 120 of the UE 100 switches the configuration of the target cell on the basis of the identifier of the candidate cell (that is, the target configuration identifier) included in the cell switch command (MAC CE). For example, the controller 120 applies candidate cell configuration information associated with the identifier of a candidate cell that is the same as the target configuration identifier included in the cell switch command (MAC CE). For example, the MAC layer in the UE 100 may notify the RRC layer of information providing notification that the cell switch command (MAC CE) is received (and the target configuration identifier). In the case where information providing notification that the cell switch command is received (and the target configuration identifier) is provided from the MAC layer to the RRC layer in the UE 100, the RRC layer may apply candidate cell configuration information associated with the identifier of a candidate cell that is the same as the target configuration identifier. That is, the UE 100 (the RRC layer thereof) may apply an LTM candidate cell configuration on the basis of reception of information indicating that a cell switch procedure is triggered by the MAC layer (information indicating that a cell switch procedure is triggered from the MAC layer). Here, the LTM candidate cell configuration may be an LTM candidate cell configuration corresponding to the target configuration identifier indicated from the MAC layer.

The controller 120 determines whether to perform RACH-based LTM or to perform RACH-less LTM on the basis of the value included in the timing advance command. In the case where a predetermined value (for example, FFF) is set in the timing advance command, the controller 120 determines to perform RACH-based LTM. On the other hand, in the case where a value other than predetermined values (for example, FFF) is set in the timing advance command, the controller 120 determines to perform RACH-less LTM.

In the present operation example, the description is proceeded with on the assumption that the controller 120 has determined to perform RACH-less LTM. Thus, on the basis of the cell switch command, the controller 120 of the UE 100 determines to control uplink transmission to the target cell that is performed without an RA procedure between the UE 100 and the target cell. The uplink transmission may be the first uplink transmission (First ULtransmission) to the target cell. The first uplink transmission may be an operation at LTM completion. Hereinafter, the first uplink transmission may be referred to as "uplink transmission".

### Step S108:

The controller 120 of the UE 100 determines radio resources for the first uplink transmission. The controller 120 determines which of the first configuration information and the second configuration information provides a basis for allowing the occasion of uplink transmission to be earlier.

The controller 120 monitors, for example, a search space configured by the first configuration information, and receives DCI. The controller 120 specifies an uplink transmission occasion (hereinafter, occasionally referred to as a DG occasion (PUSCH occasion)) according to a resource allocation indicated by the DCI (information indicating scheduling, for example a resource allocation in the time domain, and/or information indicating a resource allocation in the frequency domain). On the other hand, the controller 120 specifies the earliest uplink transmission occasion (hereinafter, occasionally referred to as a CG occasion (PUSCH occasion)) among the CG resources configured by the second configuration information. The controller 120 determines which of the DG occasion and the CG occasion is earlier.

In the case where the DG occasion is earlier than the CG occasion, the controller 120 determines to perform the first uplink transmission according to a resource allocation indicated by DCI detected in a PDCCH (search space) configured by the first configuration information. On the other hand, in the case where the CG occasion is earlier than the DG occasion, the controller 120 determines to perform the first uplink transmission on the basis of the second configuration information. Thus, the controller 120 of the UE 100 controls uplink transmission of the following steps, in an occasion in which uplink transmission is performed, out of occasions based on the first configuration information and the second configuration information.

In the case where, for example, the timing of the CG occasion is the same as or earlier than that of the DG occasion scheduled using DCI detected in a search space configured by the first configuration information, the controller 120 may determine to perform the first uplink transmission on the basis of the second configuration information. Here, the timing includes a resource in the time domain (a CG occasion and/or a DG occasion), and may be defined by an SFN, a subframe number, a slot number, and/or a symbol number. Thereby, the controller 120 can omit monitoring of the search space.

### Step S109:

The controller 120 of the UE 100 performs control to perform the first uplink transmission. The transmitter 111 of the UE 100 transmits the first uplink data to the base station 200 on the basis of the configuration information by which the occasion of uplink transmission is configured earlier.

The controller 120 of the UE 100 may start a timer on the basis of performance of the first uplink transmission. The timer may be a timer for determining whether to stop retransmission of uplink transmission or not. The timer may be, for example, a timer for counting a predetermined duration t1 from the time the first uplink transmission is performed.

The value (timer value) set in the timer may be a preset value. The timer value may be received from the base station 200. The timer value may be included in the RRC reconfiguration message. The timer value may be included in the first configuration information. In the case where the controller 120 performs uplink transmission on the basis of the first configuration information, the controller 120 may set a timer value included in the first configuration information. The timer value may be included in the second configuration information. In the case where the controller 120 performs uplink transmission on the basis of the second configuration information, the controller 120 may set a timer value included in the second configuration information.

The controller 120 may start a prohibit timer on the basis of performance of uplink transmission based on the second configuration information. In the case where the prohibit timer is in operation, the controller 120 may stop retransmission of uplink transmission based on the second configuration information.

The value (prohibit timer value) set in the timer may be a preset value. The prohibit timer value may be received from the base station 200. The prohibit timer value may be included in the RRC reconfiguration message. The prohibit timer value may be included in the second configuration information.

The receiver 112 of the base station 200 may be able to receive the first uplink transmission from the UE 100. The controller 230 of the base station 200 may, on the basis of reception of the first uplink transmission (for example, the first uplink data) in the target cell, recognize that the UE 100 has switched the serving cell to the target cell. Thereby, the controller 230 may determine that the LTM execution procedure is normally performed (that is, LTM completion is performed). The controller 230 may consider the LTM procedure as completed.

On the other hand, in the case where the receiver 112 of the base station 200 has yet to receive the first uplink transmission from the UE 100, the receiver 112 may recognize that the UE 100 has not switched the serving cell to the target cell. Thereby, the controller 230 may determine that the LTM execution procedure is not normally performed (that is, LTM completion is not performed). The controller 230 may consider the LTM procedure as uncompleted. The controller 230 does not have to consider the LTM procedure as completed.

### Step S110:

In the target cell, the transmitter 211 of the base station 200 may transmit a PDCCH to the UE 100. In the target cell, the receiver 112 of the UE 100 may receive the PDCCH.

### Step S111:

The controller 120 of the UE 100 performs the following determination on the basis of reception of the PDCCH. The controller 120 may determine whether to perform retransmission of the first uplink transmission or not.

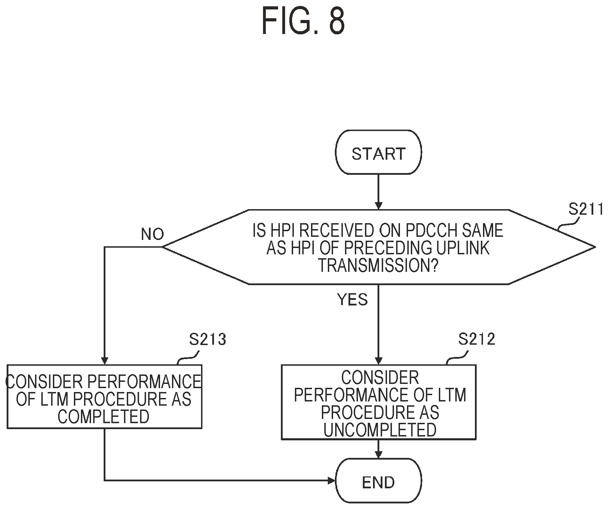

Firstly, in the case where the controller 120 has performed uplink transmission on the basis of the first configuration information, the controller 120 may perform the following operation (see Fig. 8). In the target cell, in the case where the receiver 112 has received a physical downlink control channel (PDCCH) for DCI to which a CRC (referred to also as a CRC parity bit) scrambled by a cell radio network temporary identifier (C-RNTI) (of the target cell) is attached, the controller 120 may perform the following operation.

Here, the PDCCH for DCI to which a CRC scrambled by a C-RNTI is attached is also referred to as a PDCCH with a C-RNTI. Similarly, a PDCCH for DCI to which a CRC scrambled by a configured scheduling cell radio network temporary identifier (CS-RNTI) is attached is also referred to as a PDCCH with a CS-RNTI. Further, the PDCCH with a C-RNTI is written also as a PDCCH addressed to a C-RNTI. Similarly, the PDCCH with a CS-RNTI is written also as a PDCCH addressed to a CS-RNTI.

### Step S211:

The controller 120 determines whether a hybrid automatic repeat request (HARQ) process identifier (HPI) received through the PDCCH (hereinafter, occasionally referred to as a reception HPI) is the same as an HPI of the preceding uplink transmission (hereinafter, occasionally referred to as a transmission HPI) or not.

In the case where the reception HPI and the transmission HPI are the same, the controller 120 performs the processing of Step S212. On the other hand, in the case where the reception HPI and the transmission HPI are different from each other, the controller 120 performs the processing of Step S213.

### Step S212:

The controller 120 considers the performance of the LTM procedure as not (successfully) completed. The controller 120 may not consider the performance of the LTM procedure as (successfully) completed. The controller 120 may consider the LTM completion procedure as not performed.

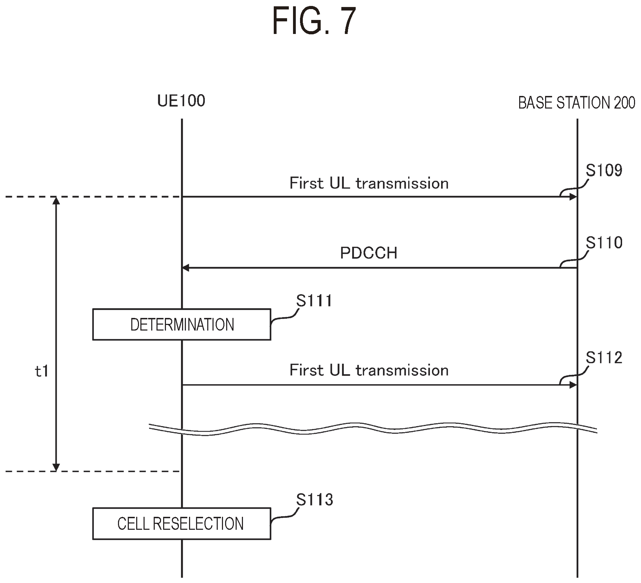

Further, the controller 120 determines to perform retransmission of the first uplink transmission. The controller 120 performs the processing of Step S112 of Fig. 7. In the case where the controller 120 performs retransmission of uplink transmission on the basis of the PDCCH, the controller 120 may regard the performance of the LTM procedure as not (successfully) completed.

### Step S213:

The controller 120 considers the performance of the LTM procedure as (successfully) completed. The controller 120 may consider the performance of the LTM procedure as (successfully) completed. The controller 120 may consider the LTM completion procedure as performed. The controller 120 may determine that the network 10 (for example, the base station 200) has successfully received the first uplink transmission (for example, the first uplink data).

Further, the controller 120 determines not to perform retransmission of the first uplink transmission.

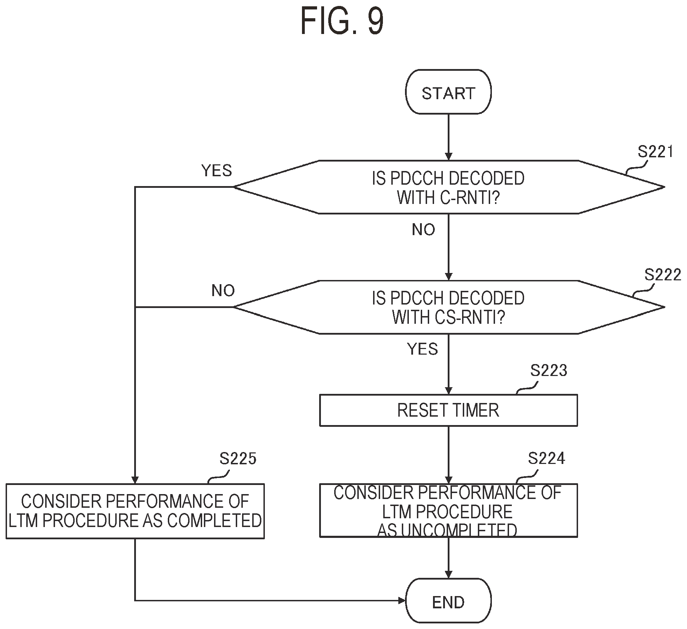

Secondly, in the case where the controller 120 has performed uplink transmission on the basis of the second configuration information, the controller 120 may perform the following operation (see Fig. 9). In the target cell, in the case where the receiver 112 has received a physical downlink control channel (PDCCH), the controller 120 may perform the following operation.

### Step S221:

The controller 120 determines whether the PDCCH is decoded with a C-RNTI (of the target cell) or not.

Here, the base station 200 may configure a C-RNTI (a value of the C-RNTI) on the UE 100. For example, the base station 200 may configure a C-RNTI by using a parameter in cell group configuration information included in an RRC reconfiguration message used to configure an LTM candidate cell. The base station 200 may configure a CS-RNTI (a value of the CS-RNTI) on the UE 100. For example, the base station 200 may configure a CS-RNTI by using a parameter in cell group configuration information included in an RRC reconfiguration message used to configure an LTM candidate cell (LTM cell switch information (for example, ltm-CellSwitchInfo-r18) included in a special cell configuration (for example, SpCellConfig) and/or a physical cell group configuration (for example, physicalCellGroupConfig)). Further, the base station 200 may configure a CG occasion by using a parameter in cell group configuration information included in an RRC reconfiguration message used to configure an LTM candidate cell (LTM cell switch information (for example, ltm-CellSwitchInfo-r18) included in a special cell configuration (for example, SpCellConfig) and/or a physical cell group configuration (for example, physicalCellGroupConfig)). The UE 100 attempts to decode the PDCCH by using the configured C-RNTI and/or CS-RNTI. That is, in the case where the C-RNTI and/or CS-RNTI configured on the UE 100 and the C-RNTI and/or CS-RNTI scrambled into a CRC attached to DCI transmitted from the base station 200 are equal to each other, the UE 100 can decode the PDCCH addressed to itself (referred to also as monitoring described above (blind decoding)).

In the case where the PDCCH is not decoded with the C-RNTI, the controller 120 performs the processing of Step S222. In the case where the PDCCH is decoded with the C-RNTI, the controller 120 performs the processing of Step S225.

Note that a PDCCH for DCI to which a CRC scrambled by a C-RNTI is attached is decoded with the same C-RNTI. On the other hand, a PDCCH for DCI to which a CRC scrambled by a different C-RNTI or another RNTI is attached is not decoded. Thus, in the case where the controller 120 has received a PDCCH without a C-RNTI allocated to the UE 100, the controller 120 performs the processing of Step S222. On the other hand, in the case where the controller 120 has received a PDCCH with a C-RNTI allocated to the UE 100, the controller 120 performs the processing of Step S225.

### Step S222:

The controller 120 determines whether the PDCCH is decoded with a configured scheduling cell radio network temporary identifier (CS-RNTI) (of the target cell) or not. In the case where the PDCCH is decoded with the CS-RNTI, the controller 120 performs the processing of Step S223. In the case where the PDCCH is decoded with the CS-RNTI, the controller 120 performs the processing of Step S225.

Note that a PDCCH for DCI to which a CRC scrambled by a CS-RNTI is attached is decoded with the same CS-RNTI. On the other hand, a PDCCH for DCI to which a CRC scrambled by a different CS-RNTI or another RNTI is attached is not decoded. Thus, in the case where the controller 120 has received a PDCCH with a CS-RNTI allocated to the UE 100, the controller 120 performs the processing of Step S223. On the other hand, in the case where the controller 120 has received a PDCCH without a CS-RNTI allocated to the UE 100, the controller 120 performs the processing of Step S225.

### Step S223:

The controller 120 resets the timer. The controller 120 may restart the timer on the basis of performance of uplink transmission.

### Step S224:

### Step S224 is similar to Step S212.

### Step S225:

Step S225 is similar to Step S213. The controller 120 may cancel, clear, deactivate, or discard the CG resources used for the first uplink transmission. The CG resources used for the first uplink transmission may be resources dedicated to the first uplink transmission.

In the case where, on the basis of the determination, the controller 120 has determined to perform retransmission of the first uplink transmission, the controller 120 may perform control to perform the following operation. In the case where the controller 120 has considered the performance of the LTM procedure as not (successfully) completed, the controller 120 may perform control to perform the following operation.

### Step S112:

The controller 120 performs retransmission of the first uplink transmission. The transmitter 111 may retransmit the first uplink data to the base station 200.

In the case where in Step S109 the controller 120 performed the first uplink transmission on the basis of the first configuration information, the controller 120 may retransmit the first uplink data to the base station 200 in radio resources scheduled on the received PDCCH.

In the case where in Step S109 the controller 120 performed the first uplink transmission on the basis of the second configuration information, the controller 120 may retransmit the first uplink data to the base station 200 on the basis of the second configuration information. Further, the controller 120 may retransmit the first uplink data to the base station 200 in, among the radio resources included in the second configuration information, radio resources indicated by a PDCCH with a CS-RNTI.

In the case where the prohibit timer is in operation, the controller 120 may stop retransmission of uplink transmission. In the case where the prohibit timer has expired, the controller 120 may perform retransmission of uplink transmission. The controller 120 may start the prohibit timer on the basis of retransmission of uplink transmission.

After that, the controller 120 similarly determines whether to perform retransmission or not. In the present operation example, a case where the LTM procedure is not completed by the expiration of the timer will be described. In the case where the LTM procedure is not completed by the expiration of the timer, the controller 120 stops retransmission of uplink transmission.

The controller 120 stops retransmission of uplink transmission on the basis of the expiration of the timer. In the case where the controller 120 is performing retransmission of uplink transmission on the basis of the first configuration information, the controller 120 may stop monitoring for retransmission. The controller 120 may, on the basis of the expiration of the timer, consider the performance of the LTM procedure as stopped.

### Step S113:

The controller 120 performs cell reselection.

As hereinabove, the receiver 112 of the UE 100 receives, from the base station 200 by means of a MAC CE, a cell switch command that triggers the cell switch. On the basis of the cell switch command, the controller 120 controls uplink transmission to a target cell that is performed without an RA procedure between the UE 100 and the target cell. The receiver 112 receives, from the base station 200, first configuration information for configuring monitoring of uplink grants for dynamically allocating radio resources for uplink transmission and second configuration information for configuring uplink transmission without an uplink grant. The controller 120 controls uplink transmission on the basis of, out of the first configuration information and the second configuration information, the configuration information by which the occasion of uplink transmission is configured earlier. Thus, in the case where the UE 100 has received both the first configuration information and the second configuration information, the UE 100 recognizes which type of configuration information to use as a basis for performing uplink transmission. The UE 100 can perform uplink transmission at an early occasion, and can complete the LTM procedure earlier. The UE 100 can perform appropriate uplink transmission.

In the LTM procedure, the controller 120 controls uplink transmission. After uplink transmission based on the first configuration information, the receiver 112 may receive a PDCCH with a C-RNTI in the target cell. In the case where the controller 120 performs retransmission of uplink transmission on the basis of the PDCCH, the controller 120 may consider the LTM procedure as uncompleted. Thereby, a situation where, even though the base station 200 has not succeeded in receiving uplink transmission, the UE 100 erroneously considers the LTM procedure as successfully completed can be avoided.

In the case where the HPI received through the PDCCH is the same as the HPI of uplink transmission, the controller 120 may consider the performance of the LTM procedure as uncompleted. Thereby, a situation where, in the case where HARQ retransmission is necessary, that is, in the case where the base station 200 has yet to appropriately receive uplink transmission, the UE 100 erroneously considers the LTM procedure as successfully completed can be avoided.

In the case where the HPI received through the PDCCH is different from the HPI of uplink transmission, the controller 120 may consider the performance of the LTM procedure as completed. Thereby, in the case where HARQ retransmission is not necessary, that is, in the case where the base station 200 has succeeded in receiving uplink transmission, the UE 100 can consider the LTM procedure as successfully completed.

In the LTM procedure, the controller 120 may control uplink transmission. The receiver 112 may receive a PDCCH after uplink transmission based on the second configuration information. In the case where the controller 120 performs retransmission of uplink transmission on the basis of the PDCCH, the controller 120 may consider the performance of the LTM procedure as uncompleted. Thereby, a situation where, even though the base station 200 has not succeeded in receiving uplink transmission, the UE 100 erroneously considers the LTM procedure as successfully completed can be avoided.

In the case where the PDCCH is decoded with a CS-RNTI, the controller 120 may perform retransmission of uplink transmission. Here, in the case where the base station 200 has succeeded in receiving uplink transmission, the base station 200 may transmit a PDCCH decodable with a C-RNTI to the UE 100. Thus, whichever of the first configuration information and the second configuration information the UE 100 uses as a basis for performing uplink transmission, the UE 100 can, by receiving a PDCCH decodable with a C-RNTI, consider the LTM procedure as successfully completed. The base station 200 can, by transmitting a PDCCH with a CS-RNTI to the UE 100, notify the UE 100 that retransmission of uplink transmission is necessary.

The controller 120 may start a prohibit timer on the basis of performance of uplink transmission based on the second configuration information. In the case where the prohibit timer is in operation, retransmission of uplink transmission may be stopped. The radio resources configured on the basis of the second configuration information are radio resources that can be used for a longer period of time than the radio resources allocated on the basis of the first configuration information. Thus, the duration from the timing at which the UE 100 receives the second configuration information to the timing at which the UE 100 performs uplink transmission based on the second configuration information is long, and the communication environment may change. By using a prohibit timer to control the retransmission interval, the controller 120 can reduce interference with the surroundings based on retransmission of uplink transmission.

The controller 120 may start a timer on the basis of performance of uplink transmission. After performing uplink transmission, the controller 120 may perform retransmission of uplink transmission. In the case where the LTM procedure is not completed by the expiration of the timer, the controller 120 may stop retransmission of uplink transmission, and perform cell reselection. Thereby, in the case where the LTM procedure is not successfully completed even after a lapse of a predetermined duration t1 from when the controller 120 performed uplink transmission, the controller 120 assumes that the communication environment between the UE 100 and the target cell has become poor. In such a case, the UE 100 may perform cell reselection, and thereby can communicate with the reselected cell earlier than in a case of initiating communication with the target cell upon successful completion of the LTM procedure.

### (Other embodiments)

In the embodiment described above, a description is given using a mobile communication system based on NR as an example of the mobile communication system 1. However, the mobile communication system 1 is not limited to this example. The mobile communication system 1 may be a system conforming to a TS of any of LTE or another generation system (for example, the sixth generation) of the 3GPP standard. The base station 200 may be an eNB that provides E-UTRA user plane and control plane protocol terminations toward the UE 100 in LTE. The mobile communication system 1 may be a system conforming to the TS of a standard other than the 3GPP standard. The base station 200 may be an IAB (Integrated Access and Backhaul) donor or an IAB node.

In the embodiment described above, a description is given using a mobile communication system based on NR as an example of the mobile communication system 1. However, the mobile communication system 1 is not limited to this example. The mobile communication system 1 may be a system conforming to a TS of long term evolution (LTE) or another generation system (for example, a sixth generation) of the 3GPP standard. The base station 200 may be an eNB that provides E-UTRA user plane and control plane protocol terminations toward the UE 100 in LTE. The mobile communication system 1 may be a system conforming to the TS of a standard other than the 3GPP standard.

The steps in the operation of the above-described embodiment are not necessarily executed in the chronological order according to the order described in the flowchart or the sequence diagram. For example, the steps in the operation may be performed in an order different from the order described in the flowchart or the sequence diagram or may be performed in parallel. Also, a part of the steps in the operation may be deleted, or additional steps may be added to the processing. Further, each operation flow described above is not limited to a case of being necessarily implemented separately and independently, and two or more operation flows can be implemented in combination. For example, a part of steps of one operation flow may be added to another operation flow, or a part of steps of one operation flow may be replaced with a part of steps of another operation flow.

A program for causing a computer to execute each of the processes executed by the UE 100 or the base station 200 may be provided. The program may be recorded in a computer-readable medium. The program can be installed in the computer using the computer-readable medium. Here, the computer-readable medium in which the program is recorded may be a non-transitory recording medium. The non-transitory recording medium is not particularly limited and may be, for example, a recording medium such as a compact disk read only memory (CD-ROM) or a digital versatile disc read only memory (DVD-ROM). Also, circuits that execute the processes executed by the UE 100 or the base station 200 may be integrated, and at least a part of the UE 100 or the base station 200 may be configured as a semiconductor integrated circuit (a chipset or a system on chip (SoC)).

In the above-described embodiment, the term "transmit" may mean executing processing of at least one layer in the protocol stack used for transmission or may mean physically transmitting a signal in a wireless or wired manner. Alternatively, the term "transmit" may mean a combination of executing the processing of at least one layer and physically transmitting the signal in a wireless or wired manner as described above. Similarly, the term "receive" may mean executing processing of at least one layer in a protocol stack used for reception or may mean physically receiving a signal in a wireless or wired manner. Alternatively, the term "receive" may mean a combination of executing the processing of at least one layer and physically receiving the signal in a wireless or wired manner as described above. Similarly, the term "obtain/acquire" may mean obtaining/acquiring information from stored information, may mean obtaining/acquiring information from information received from another node, or may mean obtaining/acquiring information by generating information. Similarly, the terms "based on" and "depending on/in response to" do not mean "based only on" or "depending only on/in response only to" unless explicitly stated otherwise. The term "based on" means both "based only on" and "at least partially based on". Similarly, the term "depending on/in response to" means both "depending only on/in response only to" and "at least partially depending on/at least partially in response to". Similarly, the terms "include" and "comprise" do not mean including only enumerated items but mean both of including only enumerated items and including more items in addition to the enumerated items. Similarly, in the present disclosure, the term "or" does not mean exclusive OR, and means OR. Further, any reference to elements using designations such as "first", "second", and the like used in the present disclosure does not generally limit the amount or the order of the elements. Such designations may be used in the present disclosure as a convenient method to distinguish between two or more elements. References to first and second elements do not mean that only two elements can be employed therein or that the first element should precede the second element in any form. In the present disclosure, for example, when articles such as "a", "an", and "the" in English are added by translation, such articles cover the plural meaning unless the context clearly indicates otherwise.

Although the present disclosure has been described according to examples, it is understood that the present disclosure is not limited to the examples or structures. The present disclosure also includes various modified examples or modifications made within an equivalent range. Additionally, various combinations or modes, or other combinations or modes including only one element, more elements, or fewer elements also fall within the scope and spirit of the present disclosure.

### (Supplementary Notes)

Features related to the above-described embodiments are additionally described.

### (Supplement 1)

A communication apparatus
comprising:
a receiver configured to receive, from a base station by means of a medium access control (MAC) control element (CE), a cell switch command that triggers a cell switch; and
a controller configured to, on the basis of the cell switch command, control uplink transmission to a target cell, the uplink transmission being performed without a random access (RA) procedure between the communication apparatus and the target cell,
wherein the receiver is configured to receive, from the base station, first configuration information for configuring monitoring of uplink grants for dynamically allocating radio resources for the uplink transmission and second configuration information for configuring the uplink transmission without the uplink grant, and
the controller is configured to control the uplink transmission on the basis of, out of the first configuration information and the second configuration information, configuration information by which an occasion of the uplink transmission is configured earlier.

### (Supplement 2)

The communication apparatus according to supplement 1, wherein
the controller is configured to control the uplink transmission in a Layer 1/Layer 2 triggered mobility (LTM) procedure,
the receiver is configured to, after the uplink transmission based on the first configuration information, receive a physical downlink control channel (PDCCH) with a cell radio network temporary identifier in the target cell, and
the controller is configured to, in a case where the controller performs retransmission of the uplink transmission on the basis of the PDCCH, consider the LTM procedure as uncompleted.

### (Supplement 3)

The communication apparatus according to supplement 2, wherein
the controller is configured to, in a case where a hybrid automatic repeat request (HARQ) process identifier received through the PDCCH is the same as the HARQ process identifier of the uplink transmission, consider performance of the LTM procedure as uncompleted.

### (Supplement 4)

The communication apparatus according to supplement 2 or 3, wherein
the controller is configured to, in a case where a hybrid automatic repeat request (HARQ) process identifier received through the PDCCH is different from the HARQ process identifier of the uplink transmission, consider performance of the LTM procedure as completed.

### (Supplement 5)

The communication apparatus according to any one of supplements 1 to 4, wherein
the controller is configured to control the uplink transmission in a Layer 1/Layer 2 triggered mobility (LTM) procedure,
the receiver is configured to, after the uplink transmission based on the second configuration information, receive a physical downlink control channel (PDCCH), and
the controller is configured to, in a case where the controller performs retransmission of the uplink transmission on the basis of the PDCCH, consider performance of the LTM procedure as uncompleted.

### (Supplement 6)

The communication apparatus according to supplement 5, wherein
the controller is configured to, in a case where the PDCCH is decoded with a configured scheduling cell radio network temporary identifier (CS-RNTI), perform retransmission of the uplink transmission.

### (Supplement 7)

The communication apparatus according to supplement 5 or 6, wherein
the controller is configured to
start a prohibit timer on the basis of performance of the uplink transmission based on the second configuration information, and
in a case where the prohibit timer is in operation, stop retransmission of the uplink transmission.

### (Supplement 8)

The communication apparatus according to any one of supplements 1 to 8, wherein
the controller is configured to
start a timer on the basis of performance of the uplink transmission,
after performing the uplink transmission, perform retransmission of the uplink transmission, and
in a case where the LTM procedure is not completed by expiration of the timer, stop retransmission of the uplink transmission and perform cell reselection.

### (Supplement 9)

A communication method performed by a communication apparatus,
the communication method comprising the steps of:
receiving, from a base station by means of a medium access control (MAC) control element (CE), a cell switch command that triggers a cell switch;
on the basis of the cell switch command, controlling uplink transmission to a target cell, the uplink transmission being performed without a random access (RA) procedure between the communication apparatus and the target cell; and
receiving, from the base station, first configuration information for configuring monitoring of uplink grants for dynamically allocating radio resources for the uplink transmission and second configuration information for configuring the uplink transmission without the uplink grant,
wherein in the step of controlling the uplink transmission, the uplink transmission is controlled on the basis of, out of the first configuration information and the second configuration information, configuration information by which an occasion of the uplink transmission is configured earlier.

### (Supplement 10)

A communication apparatus (100)
comprising:
a receiver (112) configured to receive, from a base station (200), a medium access control (MAC) control element (CE) including a cell switch command that triggers a cell switch; and
a controller (120) configured to, on the basis of the cell switch command, skip a random access (RA) procedure and perform a Layer 1/Layer 2 triggered mobility (LTM) cell switch, and in the LTM cell switch, perform transmission of a first physical uplink shared channel (PUSCH),
wherein the receiver is configured to, after transmission of the first PUSCH, receive, from the base station, a physical downlink control channel (PDCCH) with a cell radio network temporary identifier (C-RNTI), and
the controller is configured to determine whether the LTM cell switch is successfully completed or not on the basis of a hybrid automatic repeat request (HARQ) process identifier received on the PDCCH and a HARQ process identifier for transmission of the first PUSCH.

### (Supplement 11)

The communication apparatus according to supplement 10, wherein
the controller is configured to, in a case where the LTM cell switch is not successfully completed, determine to perform retransmission of transmission of the first PUSCH.

### (Supplement 12)

The communication apparatus according to supplement 11, wherein
the receiver is configured to receive, from the base station, configuration information including information for configuring an occasion of transmission of the first PUSCH and information for configuring a value of a timer, the configuration information being used to configure uplink transmission without a dynamic grant, and
the controller is configured to start the timer on the basis of performance of transmission of the first PUSCH and control retransmission of transmission of the first PUSCH on the basis of the timer.

### (Supplement 13)

A base station (200)
comprising:
a transmitter (211) configured to use a medium access control (MAC) control element (CE) to transmit, to a communication apparatus (100), a cell switch command that triggers a cell switch; and
a controller (230) configured to, on the basis of the cell switch command, perform control to skip a random access (RA) procedure and perform a Layer 1/Layer 2 triggered mobility (LTM) cell switch, and in the LTM cell switch, perform control to perform transmission of a first physical uplink shared channel (PUSCH),
wherein the transmitter is configured to, after reception of the first PUSCH, transmit, to the communication apparatus, a physical downlink control channel (PDCCH) with a cell radio network temporary identifier (C-RNTI), and
the controller is configured to indicate whether the LTM cell switch is successfully completed or not on the basis of a hybrid automatic repeat request (HARQ) process identifier received on the PDCCH and a HARQ process identifier for transmission of the first PUSCH.

### (Supplement 14)

The base station according to supplement 13, wherein
the controller is configured to, in a case where the LTM cell switch is not successfully completed, perform control to perform retransmission of transmission of the first PUSCH.

### (Supplement 15)

The base station according to supplement 14, wherein
the transmitter is configured to transmit, to the communication apparatus, configuration information including information for configuring an occasion of transmission of the first PUSCH and information for configuring a value of a timer, the configuration information being used to configure uplink transmission without a dynamic grant, and
the timer is started on the basis of performance of transmission of the first PUSCH and retransmission of transmission of the first PUSCH is controlled on the basis of the timer.

### (Supplement 16)

A communication method for a communication apparatus (100),
the communication method comprising the steps of:
receiving, from a base station (200), a medium access control (MAC) control element (CE) including a cell switch command that triggers a cell switch;
on the basis of the cell switch command, skipping a random access (RA) procedure and performing a Layer 1/Layer 2 triggered mobility (LTM) cell switch, and in the LTM cell switch, performing transmission of a first physical uplink shared channel (PUSCH); and
after transmission of the first PUSCH, receiving, from the base station, a physical downlink control channel (PDCCH) with a cell radio network temporary identifier (C-RNTI),
wherein in the step of performing transmission of the first PUSCH, whether the LTM cell switch is successfully completed or not is determined on the basis of a hybrid automatic repeat request (HARQ) process identifier received on the PDCCH and a HARQ process identifier for transmission of the first PUSCH.

### (Supplement 17)

The communication method according to supplement 16, wherein
in the step of performing transmission of the first PUSCH, in a case where the LTM cell switch is not successfully completed, it is determined to perform retransmission of transmission of the first PUSCH.

### (Supplement 18)

The communication method according to supplement 17, wherein
in the step of receiving the PDCCH, configuration information including information for configuring an occasion of transmission of the first PUSCH and information for configuring a value of a timer, the configuration information being used to configure uplink transmission without a dynamic grant, is received from the base station, and
in the step of performing transmission of the first PUSCH, the timer is started on the basis of performance of transmission of the first PUSCH and retransmission of transmission of the first PUSCH is controlled on the basis of the timer.

## Claims

1. A communication apparatus (100)
comprising:
a receiver (112) configured to receive, from a base station (200), a medium access control (MAC) control element (CE) including a cell switch command that triggers a cell switch; and
a controller (120) configured to, on the basis of the cell switch command, skip a random access (RA) procedure and perform a Layer 1/Layer 2 triggered mobility (LTM) cell switch, and in the LTM cell switch, perform transmission of a first physical uplink shared channel (PUSCH),
wherein the receiver is configured to, after transmission of the first PUSCH, receive, from the base station, a physical downlink control channel (PDCCH) with a cell radio network temporary identifier (C-RNTI), and
the controller is configured to determine whether the LTM cell switch is successfully completed or not on the basis of a hybrid automatic repeat request (HARQ) process identifier received on the PDCCH and a HARQ process identifier for transmission of the first PUSCH.

2. The communication apparatus according to claim 1, wherein
the controller is configured to, in a case where the LTM cell switch is not successfully completed, determine to perform retransmission of transmission of the first PUSCH.

3. The communication apparatus according to claim 2, wherein
the receiver is configured to receive, from the base station, configuration information including information for configuring an occasion of transmission of the first PUSCH and information for configuring a value of a timer, the configuration information being used to configure uplink transmission without a dynamic grant, and
the controller is configured to start the timer on the basis of performance of transmission of the first PUSCH and control retransmission of transmission of the first PUSCH on the basis of the timer.

4. A base station (200)
comprising:
a transmitter (211) configured to use a medium access control (MAC) control element (CE) to transmit, to a communication apparatus (100), a cell switch command that triggers a cell switch; and
a controller (230) configured to, on the basis of the cell switch command, perform control to skip a random access (RA) procedure and perform a Layer 1/Layer 2 triggered mobility (LTM) cell switch, and in the LTM cell switch, perform control to perform transmission of a first physical uplink shared channel (PUSCH),
wherein the transmitter is configured to, after reception of the first PUSCH, transmit, to the communication apparatus, a physical downlink control channel (PDCCH) with a cell radio network temporary identifier (C-RNTI), and
the controller is configured to indicate whether the LTM cell switch is successfully completed or not on the basis of a hybrid automatic repeat request (HARQ) process identifier received on the PDCCH and a HARQ process identifier for transmission of the first PUSCH.

5. The base station according to claim 4, wherein
the controller is configured to, in a case where the LTM cell switch is not successfully completed, perform control to perform retransmission of transmission of the first PUSCH.

6. The base station according to claim 5, wherein
the transmitter is configured to transmit, to the communication apparatus, configuration information including information for configuring an occasion of transmission of the first PUSCH and information for configuring a value of a timer, the configuration information being used to configure uplink transmission without a dynamic grant, and
the timer is started on the basis of performance of transmission of the first PUSCH and retransmission of transmission of the first PUSCH is controlled on the basis of the timer.

7. A communication method for a communication apparatus (100),
the communication method comprising the steps of:
receiving, from a base station (200), a medium access control (MAC) control element (CE) including a cell switch command that triggers a cell switch;
on the basis of the cell switch command, skipping a random access (RA) procedure and performing a Layer 1/Layer 2 triggered mobility (LTM) cell switch, and in the LTM cell switch, performing transmission of a first physical uplink shared channel (PUSCH); and
after transmission of the first PUSCH, receiving, from the base station, a physical downlink control channel (PDCCH) with a cell radio network temporary identifier (C-RNTI),
wherein in the step of performing transmission of the first PUSCH, whether the LTM cell switch is successfully completed or not is determined on the basis of a hybrid automatic repeat request (HARQ) process identifier received on the PDCCH and a HARQ process identifier for transmission of the first PUSCH.

8. The communication method according to claim 7, wherein
in the step of performing transmission of the first PUSCH, in a case where the LTM cell switch is not successfully completed, it is determined to perform retransmission of transmission of the first PUSCH.

9. The communication method according to claim 8, wherein
in the step of receiving the PDCCH, configuration information including information for configuring an occasion of transmission of the first PUSCH and information for configuring a value of a timer, the configuration information being used to configure uplink transmission without a dynamic grant, is received from the base station, and
in the step of performing transmission of the first PUSCH, the timer is started on the basis of performance of transmission of the first PUSCH and retransmission of transmission of the first PUSCH is controlled on the basis of the timer.
